Europäisches Patentamt

(19) European Patent Office

Office européen des brevets

(11) Veröffentlichungsnummer: 0 010 517

A1

(12) EUROPÄISCHE PATENTANMELDUNG

(21) Anmeldenummer: 79810103.6

(22) Anmeldetag: 24.09.79

(51) Int. Cl.³: B 23 D 79/00
E 01 B 31/12

(30) Priorität: 04.10.78 CH 10285/78

(43) Veröffentlichungstag der Anmeldung:
30.04.80 Patentblatt 80/9

(84) Benannte Vertragsstaaten:
CH DE FR GB

(71) Anmelder: MATIX SAFERAIL S.A.
2, route d'Oron
CH-1010 Lausanne(CH)

(72) Erfinder: Schenkel, Fritz, Dipl.-Ing.
Hasenwaid 5
CH-4612 Wangen(CH)

(74) Vertreter: Annen, Max, Dipl.-Ing.
1, ch. de Verney
CH-1009 Pully(CH)

(54) Verfahren zum Erzielen eines gleichmässigen Übergangs der Profiloberfläche zwischen zwei zu einem Langstab verbundenen Profilstäben, Vorrichtungen zur Durchführung dieses Verfahrens und eine Anwendung dieses Verfahrens.

(57) Bei einem Verfahren zum Erzielen eines gleichmässigen Uebergangs der Profiloberfläche zwischen zwei zu einem Langstab (10) verbundenen Profilstäben (2, 3) wird die Verbindungsstelle (1) zwischen den Profilstäben (2, 3) mittels eines in Längsrichtung des Langstabes (10) bewegten materialabtragenden Werkzeuges (11) bearbeitet, wobei der Langstab (10) und die Führungen (22) des Werkzeuges (11) zwecks Erzielen eines gleichmässigen Uebergangs der Profiloberfläche gegenseitig in einer Lage festgehalten werden, bei welcher der Abstand zwischen der Längsachse des Langstabes (10) und der Bahn des werkzeuges (11) im Bereich der Verbindungsstelle (1) am geringsten ist und mit zunhmender Entfernung von der Verbindungsstelle (1) stetig zunimmt.

Die Vorrichtung zur Durchführung dieses Verfahrens besitzt in einem Falle quer zur Längsrichtung des Langstabes (10) verstellbare, auf den Langstab (10) einwirkende, fixierbare Anschläge (15, 16) zum zwangsweisen bogenförmigen Verkrümmen des Langstabes (10). Gleichzeitig oder alternativ besitzt sie eine Verstellvorrichtung (28) zur kontrollierbaren Verkrümmung und Fixierung der für die Verschiebung des Werkzeuges (11) längs des Langstabes (10) bestimmten Führungen (22) des Werkeugträgers (17, 18).

Eine besondere Anwendung des Verfahrens betrifft die Bearbeitung von Schweissstellen an Kopf-an-Kopf geschweissten Schienen für Gleise.

FIG. 4

Verfahren zum Erzielen eines gleichmässigen Uebergangs der Profiloberfläche zwischen zwei zu einem Langstab verbundenen Profilstäben, Vorrichtungen zur Durchführung dieses Verfahrens und eine Anwendung dieses Verfahrens

Die Erfindung bezieht sich auf ein Verfahren zum Erzielen eines gleichmässigen Uebergangs der Profiloberfläche zwischen zwei fluchtend aneinandergereihten und Kopf-an-Kopf zu einem Langstab starr verbundenen Profilstäben mittels eines über die Verbindungsstelle der Profilstäbe in Längsrichtung des Langstabes bewegten materialabtragenden Werkzeuges. Der Begriff "Langstab" bezieht sich nicht nur auf einen Stab grosser Länge, sondern bezeichnet allgemein einen Stab, der durch Zusammenfügen von kürzeren Stäben entstanden ist.

Die Erfindung bezieht sich ebenfalls auf verschiedene Ausführungsformen einer Vorrichtung zur Durchführung der Erfindung, sowie auf eine Anwendung des Verfahrens zum Bearbeiten der Schweissstellen an Kopf-an-Kopf geschweissten Schienen für Gleise, ohne jedoch auf diese Anwendung beschränkt zu sein.

In der Technik tritt häufig der Fall ein, dass Profilstäbe fluchtend Kopf-an-Kopf starr zu einem Langstab zusammengefügt werden müssen. Ein bekanntes Beispiel ist der Gleisbau für Eisenbahnen. Dabei werden kurze Schienen durch Schweissen zu längeren Schienen verbunden.

Beim Schweissen entsteht eine Wulst, die vollständig abzutragen ist, um eine ruhige Lauffläche zu erzeugen. Während das Abtragen der Wulst bei genau fluchtenden Oberflächen beiderseits der Schweissstelle relativ wenig Probleme stellt, bietet die Herstellung eines gleichmässigen Uebergangs von einem Profilstab auf den andern im allgemeinen besondere Schwierigkeiten. Die Ursache dieser Schwierigkeiten ist vielseitig.

Eine erste Ursache besteht darin, dass die Profile der aneinandergefügten Schienen oder sonstigen Profilstäbe nicht genau übereinstimmen. Es ist dann unmöglich, die Profilstäbe so aneinanderzufügen, dass auf keiner Seite des Profils ein sprunghafter Uebergang von einem Stabende zum andern entsteht. Dies ist besonders bei der Wiederverwendung von Altschienen der Fall. Aber auch bei der Verwendung von neuen Schienen führen die unvermeidlichen Herstellungstoleranzen zu Profildifferenzen. Es wird auch oft beobachtet, dass die Schienen an ihren Enden leicht verbogen sind. Weitere Fehler beim Uebergang von einer Schiene zur andern entstehen durch nicht genau fluchtendes Ausrichten der Schienen. Schliesslich können beim Schweissen geringfügige Verschiebungen durch mechanische oder thermische Einflüsse auftreten.

Die beschriebenen Fehler und deren Ursachen können nicht nur im Gleisbau bei der Herstellung von Langschienen auftreten, sondern allgemein auch dort, wo einzelne, unter sich gleichartige Profilstäbe zu Langstäben zusammengefügt werden. Die Profilstäbe können auch gebogen sein. Die beschriebenen Probleme und Fehler treten ausserdem nicht nur bei Schweissverbindungen, sondern zum Teil auch bei andern

0010517

starren Verbindungskarten, wie Löten, Kleben oder
dergleichen, auf. Die Fehler sind auch weitgehend
unabhängig von der Art des materialabtragenden Werkzeuges, wie Hobel, Fräser, Schleifscheibe oder
dergleichen.

Es sind Einrichtungen für die Bearbeitung von
geschweissten Langschienen bekannt, bei denen die
Schweisswulste unmittelbar nach dem Schweissen
mittels Abgratungsmesser profilnahe abgetragen werden.
Anschliessend wird die Schweisstelle mittels eines
rotierenden Werkzeuges, z. B. Topf-Schleifscheibe,
feingeschliffen. Der Träger des Werkzeuges ist auf
bekannte Weise derart eingerichtet, dass die Schleifscheibe längs der Langschiene an der Schweisstelle
vorbeibewegt werden kann, ferner dass die Schleifscheibe quer zur Langschiene einstellbar ist, sowie
dass sie in einer Ebene quer zur Langschiene
konzentrisch um den Kopf der Schiene herumgeschwenkt
werden kann, um sowohl die Lauffläche als auch die
beiden Seitenflanken des Schienenkopfes zu bearbeiten.
Die Langschiene selbst ruht auf einer Reihe von
fluchtend hintereinander angeordneten Abstützungen.
Diese sind so eingerichtet, dass die Langschiene im
Sollzustand, d.h. in der Regel gerade, ausgerichtet
ist. Der Werkzeugträger seinerseits ist in einem
verschiebbaren Gestell gelagert. Dieses stützt sich
über Rollen auf die Schienen oberfläche ab, so dass
die Schleifscheibe in einem einstellbaren Abstand
über die Schienenoberfläche geführt wird.

Es ist mit einer solchen Einrichtung meist nur dann
ein einwandfreier Uebergang von einem Schienenende
zum andern zu erzielen, wenn die vorbeschriebenen
Fehler ein toleriertes Mass nicht überschreiten, d.h.

wenn die Oberflächen der beiden Schienenenden nach dem Schweissen genau aufeinander ausgerichtet sind und es sich nur noch darum handelt, die Schweisswulst abzutragen.　Bei Auftreten von grösseren Fehlern zeigt sich hingegen, dass es sehr schwierig ist, zu erreichen, dass die bearbeitete Oberfläche allmählich in die Oberfläche der Stabenden übergeht. Es besteht z. B. die Gefahr, dass anstelle eines ursprünglichen sprunghaften Uebergangs eine wellige Fläche, d.h. nebeneinander eine Vertiefung und eine Erhöhung , gebildet wird. Es ist klar, dass derartige Schienenfehler Anlass zu störenden Einflüssen auf den Fahrbetrieb geben können und deshalb möglichst auszumerzen sind.

Die Erfindung stellt sich zur Aufgabe, ein Verfahren zum Erzielen eines gleichmässigen Uebergangs der Profiloberfläche zwischen zwei fluchtend aneinandergereihten und Kopf-an-Kopf zu einem Langstab starr verbundenen Profilstäben mittels eines über die Verbindungsstelle der Profilstäbe in Längsrichtung des Langstabes bewegten materialabtragenden Werkzeuges zu schaffen, das die oben beschriebenen Nachteile vermeidet und das es erlaubt, mit relativ kleinem Zeitaufwand einen ausreichend gleichmässigen Uebergang von einem Profilstab auf den andern zu erzielen.　Gemäss der Erfindung ist das Verfahren dadurch gekennzeichnet, dass bei der Bearbeitung der Verbindungsstelle durch das Werkzeug der Langstab und die Führung des Werkzeuges in einer Lage festgehalten werden, bei welcher der Abstand zwischen der Längsachse des Langstabes und der Bahn des Werkzeuges im Bereich der Verbindungsstelle am geringsten und mit zunehmender Entfernung von der Verbindungsstelle stetig zunimmt.

- 5 -

0010517

Eine spezielle Ausführungsform des Verfahrens gemäss der Erfindung ist dadurch gekennzeichnet, dass die Führung des Werkzeuges derart festgehalten wird, dass das Werkzeug in gerader Bahn an der Verbindungsstelle vorbeigeführt wird und dass der Langstab mindestens im Bereich der Verbindungsstelle aus der Sollage heraus gegen die Bahn des Werkzeuges gekrümmt und in dieser Lage für die Bearbeitung durch das Werkzeug festgehalten wird.

Eine andere spezielle Ausführungsform des Verfahrens gemäss der Erfindung ist dadurch gekennzeichnet, dass der Langstab in seiner Sollage und die Führung des Werkzeuges derart festgehalten werden, dass das Werkzeug in einer gegen den Langstab gerichteten konvexen Bahn an der Verbindungsstelle vorbeigeführt wird.

Die Erfindung umfasst auch spezielle Ausführungsformen einer Vorrichtung zum Erzielen eines gleichmässigen Uebergangs der Profiloberfläche zwischen zwei fluchtend aneinandergereihten und Kopf-an-Kopf zu einem Langstab starr verbundenen Profilstäben mittels eines über die Verbindungsstelle der Profilstäbe in Längsrichtung des Langstabes bewegten materialabtragenden Werkzeuges, bei welcher fluchtend hintereinander angeordnete Abstützungen zur Abstützung des Langstabes in der Sollage vorhanden sind und welche mit einem in Längsrichtung des Langstabes verschiebbaren materialabtragenden Werkzeug ausgerüstet ist. Eine erste Ausführungsform der Vorrichtung gemäss der Erfindung ist gekennzeichnet durch quer zur Längsrichtung des Langstabes verstellbare, auf den Langstab von mindestens zwei entgegengesetzten Richtungen quer zur Längsrichtung des Langstabes einwirkenden, fixierbaren Anschlägen zum zwangsweisen, bogenförmigen Verkrümmen des Langstabes.

Eine weitere Ausführungsform der Vorrichtung gemäss der Erfindung ist dadurch gekennzeichnet, dass die für die Verschiebung des Werkzeuges in Längsrichtung des Langstabes bestimmte Führung des Werkzeugträgers bogenförmig gekrümmt ist.

Eine weitere Ausführungsform der Vorrichtung gemäss der Erfindung ist gekennzeichnet durch eine Verstellvorrichtung zur kontrollierbaren Verkrümmung und Fixierung der für die Verschiebung des Werkzeuges längs des Langstabes bestimmten Führung des Werkzeugträgers.

Eine Anwendung des Verfahrens gemäss der Erfindung besteht im Bearbeiten der Schweissstellen an Kopf-an Kopf geschweissten Schienen für Gleise. Die Erfindung ist jedoch nicht auf diese Anwendung beschränkt.

Die Erfindung ist nachstehend anhand von lediglich Ausführungsbeispiele darstellenden Zeichnungen näher erläutert. Es zeigen

Fig. 1   eine Seitenansicht einer durch Schweissen erzeugten Verbindungsstelle zwischen zwei Profilstäben im Rohzustand;

Fig. 2   einen Querschnitt durch einen Profilstab mit Verbindungsstelle gemäss der Linie I – I in Fig. 1;

Fig. 3a – 3d vier Skizzen zur schematischen Veranschaulichung von vier verschiedenen Beispielen der gegenseitigen Lage der Bahn eines materialabtragenden Werkzeuges
und der Längsachse eines Langstabes;

Fig. 4 eine Seitenansicht einer Vorrichtung zur
Durchführung des Verfahrens gemäss der
Erfindung, und

Fig. 5 einen Schnitt durch die in Fig. 4 dargestellte Vorrichtung gemäss der Linie
II - II in Fig. 4.

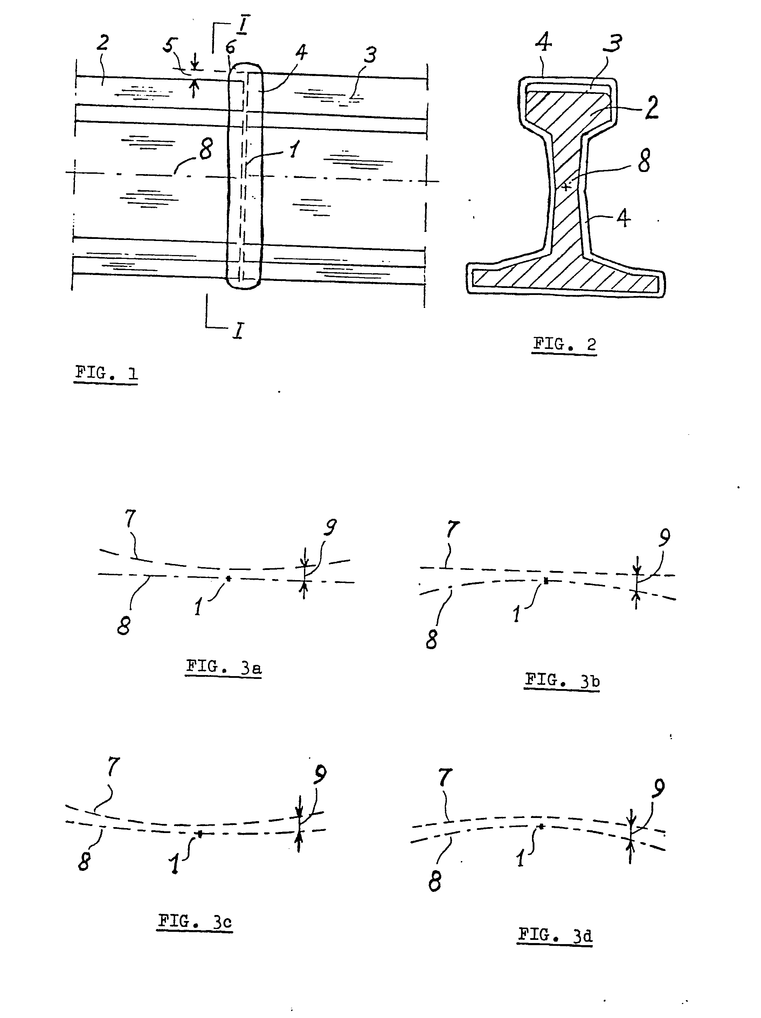

In Fig. 1 und Fig. 2 ist als Beispiel eine durch das bekannte Abbrennschweissen erzeugte Verbindungsstelle 1 zwischen zwei Schienenenden 2 und 3 schematisch dargestellt. ———————————————
Beim Schweissen ist eine Wulst 4 entstanden, die mindestens im Bereich des Schienenkopfes vollständig abzutragen ist derart, dass ein möglichst glatter Uebergang von einer Schienenoberfläche auf die andere entsteht. Dies erfolgt in bekannter Weise in mehreren Stufen unter Einsatz von geeigneten materialabtragenden Werkzeugen. Der letzte Materialabtrag erfolgt meistens mittels einer rotierenden Topf-Schleifscheibe, wobei das Werkstück, d.h. die Schiene, festgehalten wird, während das Werkzeug längs der Schiene eine Hin- und Herbewegung ausführt und nach Massgabe des Materialabtrages gegen das Werkstück zugestellt wird. Normalerweise ist die Bearbeitung beendet, wenn die Schweisswulst 4 bis auf die Schienenoberfläche abgetragen ist.

Wegen der eingangs erwähnten Fehler ist jedoch die Schienenoberfläche in der Nähe der Schienenenden keine eindeutig definierte Bezugsfläche. In Fig. 1

0010517

und Fig. 2 ist z.B. der Fall dargestellt, bei dem die Profile der beiden Schienenenden 2 und 3 nicht genau übereinstimmen. Es ist zwischen den Laufflächen ein sprunghafter Uebergang 5 vorhanden, der jedoch durch die Schweisswulst 4 überdeckt ist. Wenn das Abtragen, wie bisher üblich, genau parallel zur Schienenoberfläche erfolgt, so ist die Bearbeitung spätestens dann zu beenden, wenn die Wulst 4 bis auf das Niveau der höher liegenden Lauffläche des Schienenendes 3 abgetragen ist. Dabei besteht jedoch weiterhin ein sprunghafter Uebergang des bisherigen Ausmasses. Er ist jedoch von der Verbindungsstelle 1 an den Ansatz 6 der Schweisswulst 4 auf der tieferen Lauffläche gerückt worden. Wie bereits erwähnt, ist ein solcher sprunghafter Uebergang in der Lauffläche eines Schienenstranges nicht tolerierbar. Er muss auf eine möglichst grosse Distanz ausgeglichen werden, was bisher nur unter sehr hohem Zeitaufwand gemacht werden konnte. Da der sprunghafte Uebergang schon vor der Schweissung bestanden hatte, liegt es auf der Hand, dass das Problem auch losgelöst von der Art der Verbindung, wie Schweissen, Löten, Kleben oder dergleichen und auch bei anderen Arten von Profilstäben, besteht. Anstelle des sprunghaften Uebergangs kann auch ein anderer Fehler, wie z.B. ein Winkel zwischen den aneinanderstossenden Laufflächen der Schienenenden 2, 3 vorhanden sein.

Das Verfahren gemäss der Erfindung erlaubt es, einen im Toleranzbereich liegenden, gleichmässigen Uebergang von einer Profiloberfläche zur andern über die Verbindungsstelle hinweg zu erzeugen. Das Prinzip des Verfahrens sei nachstehend anhand der Skizzen Fig. 3a bis Fig. 3d erläutert. Es ist mit dem Bezugszeichen 7 die Bahn der Arbeitsfläche des Werkzeuges längs des Langstabes bezeichnet. Unter Langstab sei allgemein das durch fluchtendes Aneinanderreihen und durch Verbinden mittels Schweissen. Löten, Kleben usw. von einzelnen Profilstäben entstandene Gebilde verstanden. Der Langstab ist in den Figuren 3a bis 3d durch eine gedachte Längsachse 8 dargestellt. Wie diese genau definiert ist, spielt im Zusammenhang mit der Erfindung keine Rolle. Sie sei hier beim Beispiel der Schiene als die durchlaufende Verbindungslinie der Schwerpunkte der Querschnitte durch die Schienen definiert. Es ist in den Skizzen von der Tatsache abgesehen worden, dass diese Verbindungslinie an den Verbindungsstellen 1 aus den eingangs erwähnten Gründen eine kleine Unstetigkeit aufweisen kann. Sie tritt im Massstab der Skizzen jedoch nicht in Erscheinung.

Erfindungsgemäss kann ein gleichmässiger Uebergang von einem Profilstab auf den anschliessenden Profilstab, bzw. von einem Schienenende auf das andere, erzeugt werden, wenn mindestens eine der beiden, nämlich entweder die Bahn 7 des Werkzeuges oder der Langstab, zu einem Bogen gekrümmt werden, derart, dass ihr gegenseitiger Abstand 9 im Bereich der Verbindungsstelle 1 am geringsten ist und mit zunehmender Entfernung von der Verbindungsstelle 1 stetig zunimmt. Hierbei ist für das Prinzip der Erfindung freigestellt, welche der beiden, die Bahn 7 des Werkzeuges oder der Langstab, in Bogenform gebracht wird. Gegebenenfalls können beide geeignet gekrümmt werden, wie in Fig. 3c und Fig. 3d dargestellt. Welche Lösung gewählt wird, hängt von verschiedenen Gesichtspunkten ab, auf welche hier nicht eingegangen zu werden braucht. Je nach der Härte und der Zähigkeit des Werkstoffes, Form des Profils usw. wird sich der Fachmann für die eine oder andere Lösung entscheiden und das Ausmass der Krümmung festlegen. Die Bahn 7 und der Langstab bzw. seine Längsachse 8 liegen dabei in einer gemeinsamen Ebene.

In der Anordnung gemäss Fig. 3a wird der Langstab in der geradlinigen Form festgehalten und das Werkzeug bogenförmig am Langstab vorbeigeführt. Die Bahn 7 des Werkzeuges kommt dem Langstab an der Verbindungsstelle 1 am nächsten, wobei dort Material von der Oberfläche des Langstabes abgetragen wird. Die Bahn 7 des Werkzeuges entfernt sich stetig von der Oberfläche des Langstabes mit zunehmender Entfernung von der Verbindungsstelle 1, so dass die Schleifspur nach beiden Seiten allmählich ausläuft. Mit fortschreitender Materialabtragung wird das Werkzeug, wie üblich, nachgestellt, bis die Sollfläche erreicht ist. In der Variante gemäss Fig. 3b wird das Werkzeug auf einer geraden Bahn 7 geführt und der Langstab in einem gegen die Bahn 7 gekrümmten Bogen festgehalten. Nach Beendigung des Arbeitsgangs wird der Langstab wieder in die gerade Sollage zurückgeführt. Es können auch sowohl die Bahn 7 des Werkzeuges als auch der Langstab je zu einem Bogen gekrümmt sein, wobei die Krümmungsradien der beiden Bögen im Bereich der Verbindungsstelle 1 in der Weise voreinander verschieden sind, dass ihr gegenseitiger Abstand mit zunehmendem Abstand von der Verbindungsstelle 1 stetig zunimmt. Gegebenenfalls können die beiden Bögen auch konvex gegeneinander gerichtet sein. Das Verfahren ist auch entsprechend anwendbar auf Langstäbe, deren Längsachse 8 im Sollzustand gekrümmt ist.

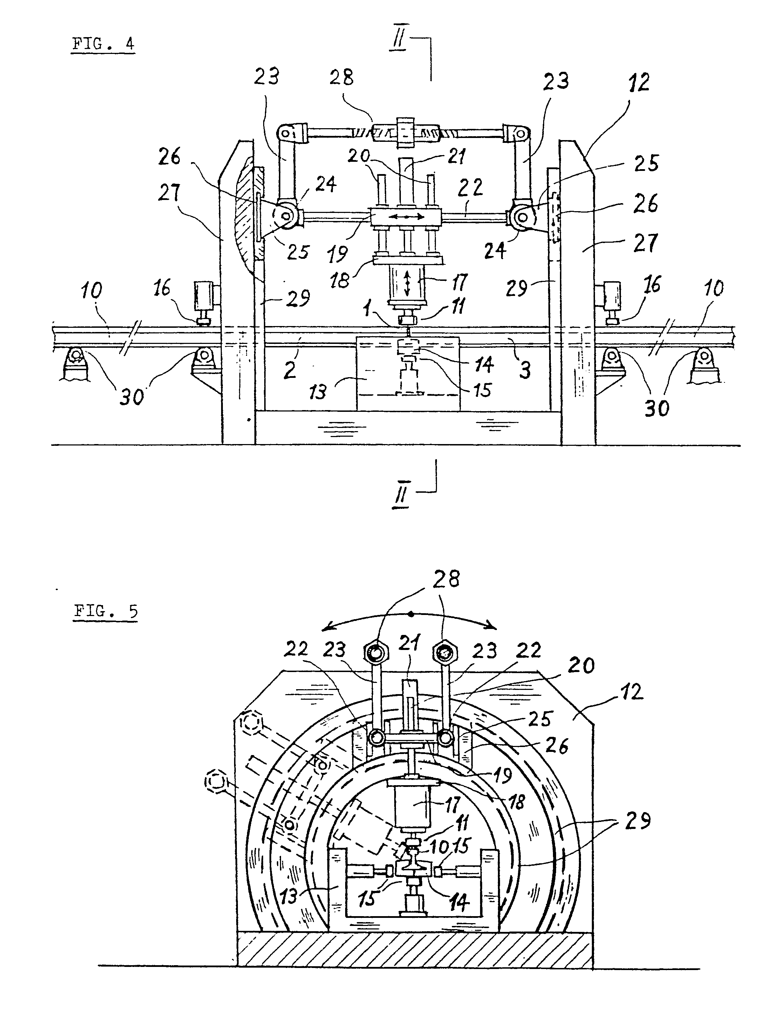

Die Vorrichtung zur Durchführung des Verfahrens gemäss der Erfindung ist in Fig. 4 und Fig. 5 am Beispiel einer Langschiene 10 dargestellt. Diese ruht auf einer Reihe von Abstützungen 30 auf, die so fixiert sind, dass sich die Langschiene 10 in der vorzugsweise geraden Sollage befindet. Die geschweisste und bereits vorbearbeitete Verbindungsstelle 1 in der Langschiene 10 befindet sich dabei in der Mittelsenkrechten einer Topf-Schleifscheibe 11. Diese ist einstellbar in einem Gestell 12 gelagert und geführt, wie anschliessend erläutert werden soll. Gegebenenfalls kann das Gestell 12 längs der Langschiene 10 verschiebbar sein, damit es zur Verbindungsstelle 1 herangefahren werden kann, falls die Langschiene 10 festgehalten wird.

In einem weiteren Gestell 13 sind die Organe zum Positionieren und Festhalten der Langschiene 10 angeordnet. Im gezeichneten Beispiel, bei dem der Langstab eine Eisenbahnschiene ist, wird man sich bei der Endbearbeitung auf die Bearbeitung des Schienenkopfes beschränken, so dass die Schiene am Schienen - fuss mittels Klemmschuhen 14 festgehalten werden kann. Mittels hydraulisch oder sonstwie verstell- und fixierbarer Anschläge 15 kann die Langschiene 10 in beliebiger Richtung quer zu seiner Längsachse 8 verschoben werden. Mit den Anschlägen 15 wirken am Gestell 12 gelagerte, hydraulisch andrückbare Anschläge 16 zusammen, um die gewünschte Position der Langschiene 10 zu erhalten und um dem Druck des Werkzeuges 11 entgegenzuarbeiten. Die durch die Anschläge 15, 16 gegebene Verstellmöglichkeit schliesst jedoch nicht aus, dass die Langschiene 10, wie bisher üblich, in einer geraden Sollage festgehalten werden kann. Gegebenenfalls können die verstellbaren Anschläge 15 wegfallen, wenn die Vorrichtung ausschliesslich zur Durchführung der in Fig. 3a dargestellten Variante des Verfahrens gemäss der Erfindung eingerichtet  sein soll.

Die Topf-Schleifscheibe 11 sitzt auf dem freien
Wellenende eines Antriebsmotors 17.  Dieser ist auf
einer Tragplatte 18 befestigt, die in einem Gleitstück 19 parallel zur Rotationsachse der Schleifscheibe 11 mittels senkrechter Führungen 20 verschiebbar gelagert ist.  Ein Verstellmotor 21 dient zum
Verschieben und zum durch nicht gezeichnete Anschläge
begrenzten Andrücken der Schleifscheibe 11 an die
Langschiene 10.

Das Gleitstück  19 ist auf zwei unter sich und zur Sollage der Langschiene 10  parallelen Führungen 22 verschiebbar gelagert.  Ein nicht gezeichneter Stellmotor dient der Hin- und Herbewegung des Gleitstückes
19 auf den Führungen 22.  Diese sind beiderseits
endseitig je in einem horizontalen Schenkel je eines
Winkelhebels 23 gelagert.  Die Winkelhebel 23 sind
ihrerseits um je eine Schwenkachse 24 an Ständern 25
drehbar gelagert.  Die Ständer 25 sind ihrerseits an
senkrechten Seitenplatten 26 befestigt.  Letztere
sind auf eine später zu beschreibende Weise an zwei
senkrechten Ständern 27 des Gestells 12 gelagert.

Je eine längeneinstellbare Stellvorrichtung 28 verbindet je zwei gegenüberliegende, nach oben gerichtete
Hebelarme der Winkelhebel 23.  Durch Verkürzung der
Stellvorrichtungen 28 werden die Winkelhebel 23 in
entgegengesetztem Drehsinn geschwenkt, so dass auf
die elastisch nachgiebigen Führungen 22 ein Biegemoment ausgeübt wird, durch das diese Führungen zu
einer nach unten konvexen Bogen gekrümmt werden. Das
Gleitstück 19 wird dadurch nicht mehr geradlinig, sondern in einem Bogen geführt. Dementsprechend beschreibt das Werkzeug 11 bei seiner Hin- und Herbewegung längs der Führungen 22 die in Fig. 3a angedeutete gekrümmte Bahn 7. Eine Verlängerung der Stellvorrichtungen 28 bewirkt die Krümmung der Führungen 22 in einem nach oben konvexen Bogen entsprechend Bahn 7 in Fig. 3d.

Falls die Vorrichtung ausschliesslich zur Durchführung der in Fig. 3b illustrierten Variante des Verfahrens gemäss der Erfindung eingerichtet sein soll, können die Winkelhebel 23 und die Stellvorrichtung 28 entfallen. In diesem Falle sind die Führungen 22 geradlinig starr und sind unmittelbar an den Seitenplatten 26 befestigt. Gegebenenfalls können die Führungen 22 auch in einem vorbestimmten, unveränderlichen Bogen gekrümmt sein, was eine Arbeitsweise nach Fig. 3a oder nach Fig. 3c ermöglicht.

Damit die Langschiene 10, d.h. im speziellen Fall der Schienenkopf, auf der Lauffläche und auf den Flanken bearbeitet werden kann, sind die Teile, die das Werkzeug 11 tragen, in einer Ebene senkrecht zur Längachse der Langschiene 10 schwenkbar gelagert. Zu diesem Zweck sind die Seitenplatten 26 als Kreissegmente ausgebildet. Diese sind in Kreisführungen 29 der Seitenständer 27 des Gestells 12 gelagert. Mittels einer nicht dargestellten Antriebsvorrichtung lassen sich die Platten 26 in einem Kreis um die Langschiene 10 herum verschwenken. In Fig. 4 ist eine willkürlich ausgewählte, aus der Vertikalen ausgeschwenkte Lage der Werkzeugachse mit gestrichelten Linien angedeutet.

0010517

Das Ausmass der Verkrümmung der Langschiene 10 bzw. der Bahn 7 des Werkzeuges 11 richtet sich nach der Art und Grösse des Fehlers an der Verbindungsstelle 1. Da bei den Verfahrensweisen nach Fig. 3b - 3d die Langschiene 10 für die Bearbeitung aus seiner Sollage herausgedrückt worden ist, ist die Materialabtragung nach Massgabe der Erfahrung des mit der Durchführung des Verfahrens beschäftigten Fachmannes so zu beenden, dass nach der anschliessenden Rückführung der Langschiene 10 in die Sollage der gewünschte allmähliche Uebergang in der Lauffläche vorhanden ist.

- 1 -

0010517

<u>Patentansprüche</u>

1. Verfahren zum Erzielen eines gleichmässigen Uebergangs der Profiloberfläche zwischen zwei fluchtend aneinandergereihten und Kopf-an-Kopf zu einem Langstab
starr verbundenen Profilstäben mittels eines über die
Verbindungsstelle der Profilstäbe in Längsrichtung
des Langstabes bewegten materialabtragenden Werkzeuges, dadurch gekennzeichnet, dass bei der Bearbeitung der Verbindungsstelle (1) durch das Werkzeug (11) der Langstab (10) und die Führung (22) des
Werkzeuges (11) in einer Lage festgehalten werden,
bei welcher der Abstand (9) zwischen der Längsachse
des Langstabes (10) und der Bahn (7) des Werkzeuges
(11) im Bereich der Verbindungsstelle (1) am geringsten ist und mit zunehmender Entfernung von der
Verbindungsstelle (1) stetig nimmt.

2. Verfahren nach Patentanspruch 1, dadurch gekennzeichnet, dass die Führung (22) des Werkzeuges (11)
derart festgehalten wird, dass das Werkzeug (11) in
gerader Bahn (7) an der Verbindungsstelle (1) vorbeigeführt wird und dass der Langstab (10) mindestens im
Bereich der Verbindungsstelle (1) aus der Sollage
heraus gegen die Bahn (7) des Werkzeuges (11)
gekrümmt und in dieser Lage für die Bearbeitung durch
das Werkzeug (11) festgehalten wird.

3. Verfahren nach Patentanspruch 1, dadurch gekennzeichnet, dass der Langstab (10) in seiner Sollage
festgehalten wird und dass die Führung (22) des Werkzeuges (11) in einer Lage fest gehalten wird, bei
welcher das Werkzeug (11) in einer gegen den Langstab
(10) gerichteten konvexen Bahn (7) an der Verbindungsstelle (1) vorbeigeführt wird.

4. Verfahren nach Patentanspruch 1, dadurch gekennzeichnet, dass das Werkzeug (11) in einer gebogenen Bahn (7) an der Verbindungsstelle (1) vorbeigeführt wird und dass der Langstab (10) aus der Sollage heraus bogenförmig gekrümmt und in dieser Lage für die Bearbeitung durch das Werkzeug (11) festgehalten wird.

5. Vorrichtung zum Erzielen eines gleichmässigen Uebergangs der Profiloberfläche zwischen zwei fluchtend aneinandergereihten und Kopf-an-Kopf zu einem Langstab starr verbundenen Profilstäben mittels eines über die Verbindungsstelle der Profilstäbe in Längsrichtung des Langstabes bewegten materialabtragenden Werkzeuges, bei welcher fluchtend hintereinander angeordnete Abstützungen zur Abstützung des Langstabes in der Sollage vorhanden sind und welche mit einem in Längsrichtung des Langstabes verschiebbaren materialabtragenden Werkzeug ausgerüstet ist, gekennzeichnet durch quer zur Längsrichtung des Langstabes (10) verstellbare, auf den Langstab (10) von mindestens zwei entgegengesetzten Richtungen quer zur Längsrichtung des Langstabes (10) einwirkenden, fixierbaren Anschlägen (15, 16) zum zwangsweisen bogenförmigen Verkrümmen des Langstabes (10).

6. Vorrichtung zum Erzielen eines gleichmässigen Uebergangs der Profiloberfläche zwischen zwei fluchtend aneinandergereihten und Kopf-an-Kopf zu einem Langstab starr verbundenen Profilstäben mittels eines über die Verbindungsstelle der Profilstäbe in Längsrichtung des Langstabes bewegten materialabtragenden Werkzeuges, bei welcher fluchtend hintereinander angeordnete Abstützungen zur Abstützung des Langstabes in der Sollage vorhanden sind und welche

0010517

mit einem in Längsrichtung des Langstabes verschiebbaren materialabtragenden Werkzeug ausgerüstet ist, dadurch gekennzeichnet, dass die für die Verschiebung des Werkzeuges (11) in Längsrichtung des Langstabes (10) bestimmte Führung (22) des Werkzeugträgers (17, 18) bogenförmig gekrümmt ist.

7. Vorrichtung zum Erzielen eines gleichmässigen Uebergangs der Profiloberfläche zwischen zwei fluchtend aneinandergereihten und Kopf-an-Kopf zu einem Langstab starr verbundenen Profilstäben mittels eines über die Verbindungsstelle der Profilstäbe in Längsrichtung des Langstabes bewegten materialabtragenden Werkzeuges, bei welcher fluchtend hintereinander angeordnete Abstützungen zur Abstützung des Langstabes in der Sollage vorhanden sind und welche mit einem in Längsrichtung des Langstabes verschiebbaren materialabtragenden Werkzeug ausgerüstet ist, gekennzeichnet durch eine Verstellvorrichtung (28) zur kontrollierbaren Verkrümmung und Fixierung der für die Verschiebung des Werkzeuges (11) längs des Langstabes (10) bestimmten Führung (22) des Werkzeugträgers (17, 18).

8. Anwendung des Verfahrens nach einem der Patentansprüche 1 bis 4 zum Bearbeiten der Schweissstellen von Kopf-an-Kopf geschweissten Schienen für Gleise.

FIG. 1

FIG. 2

FIG. 3a

FIG. 3b

FIG. 3c

FIG. 3d

FIG. 4

FIG. 5

Europäisches
Patentamt

**EUROPÄISCHER RECHERCHENBERICHT**

Nummer der Anmeldung
0010517

EP 79 810 103.6

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.³) |
|---|---|---|---|
| X | US - A - 3 230 832 (E.F. COX)<br>* Spalte 2, Zeilen 14 bis 29; Spalte 3, Zeilen 1 bis 55; Spalte 5, Zeilen 27 bis 58; Spalte 9, Zeilen 35 bis 64; Ansprüche 1 und 8; Fig. 1 bis 4 *<br>-- | 1,2,<br>5,8 | B 23 D  79/00<br>E 01 B  31/12 |
| X | US - A - 3 355 991 (E.F. COX)<br>* Anspruch 1; Spalte 1, Zeilen 11 bis 60 *<br>-- | 1,3,<br>6,8 | |
| X | US - A - 2 975 265 (W.S. KAISER et al.)<br>* Anspruch 1; Spalte 1, Zeilen 15 bis 66; Fig. 3 bis 5 *<br>-- | 1,3,6 | **RECHERCHIERTE SACHGEBIETE (Int. Cl.³)**<br><br>B 23 C  3/12<br>B 23 D  1/00<br>B 23 D  79/00<br>B 23 K  11/04<br>B 24 B  7/12<br>E 01 B  31/00 |
| | US - A - 2 714 339 (F.J. WALDSCHUTZ)<br>* Spalte 2, Zeilen 10 bis 19 *<br>-- | 1 | |
| A | DE - C - 208 891 (TH. GOLDSCHMIDT)<br>-- | 1 | |
| A | GB - A - 831 652 (MATERIEL INDUSTRIEL S.A.)<br>---- | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 16-01-1980 | MARTIN |

EPA form 1503.1  06.78